**Europäisches Patentamt**

**European Patent Office**

**Office européen des brevets**

(19)

(11) Veröffentlichungsnummer: **0 297 340 B1**

# (12) EUROPÄISCHE PATENTSCHRIFT

(45) Veröffentlichungstag der Patentschrift: **19.02.92**

(51) Int. Cl.⁵: **C04B 2/08**, B01D 53/34

(21) Anmeldenummer: **88109403.1**

(22) Anmeldetag: **14.06.88**

(54) **Kalktrockenlöschanlage und Verfahren zum Kalktrockenlöschen sowie Rauchgasentschwefelungsanlage mit einer solchen Kalktrockenlöschanlage und Verfahren zur Rauchgasentschwefelung.**

(30) Priorität: **01.07.87 DE 3721773**

(43) Veröffentlichungstag der Anmeldung:
**04.01.89 Patentblatt 89/01**

(45) Bekanntmachung des Hinweises auf die
Patenterteilung:
**19.02.92 Patentblatt 92/08**

(84) Benannte Vertragsstaaten:
**AT BE CH DE ES FR GB IT LI NL SE**

(56) Entgegenhaltungen:
**DE-A- 2 116 533**
**DE-B- 1 072 176**

(73) Patentinhaber: **Graf, Rolf, Dr.**
**Am Felsenkeller 43**
**W-6382 Friedrichsdorf(DE)**

(72) Erfinder: **Graf, Rolf, Dr.**
**Am Felsenkeller 43**
**W-6382 Friedrichsdorf(DE)**

(74) Vertreter: **Schlagwein, Udo, Dipl.-Ing.**
**Anwaltsbüro Ruppert & Schlagwein Frankturter Strasse 34**
**W-6350 Bad Nauheim(DE)**

## Beschreibung

Die Erfindung bezieht sich auf eine Kalktrokkenlöschanlage mit einem Löschreaktor, in welchem der zu löschende Kalk eingetragen und von unten Wirblerluft eingeblasen und Löschwasser eingegeben wird und hinter dem eine Feststoffabscheidung mit einem Sammelbehälter vorgesehen ist und die eine Kühleinrichtung zum Aufnehmen eines Teils der beim Löschvorgang freiwerdenden Wärme hat. Weiterhin betrifft die Erfindung ein Verfahren zum Kalktrockenlöschen, eine Rauchgasentschwefelungsanlage mit einer solchen Kalktrokkenlöschanlage und ein Verfahren zur Rauchgasentschwefelung.

Eine Kalktrockenlöschanlage der eingangs genannten Art ist in der DE-OS 21 16 533 beschrieben. Um bei der Löschreaktion die Temperatur auf einem für den Löschvorgang geeigneten Wert zu halten, wird in den dort gezeigten Löschreaktor weit mehr Wasser in Form von Dampf eingegeben als stöchiometrisch erforderlich. Zur Erzeugung dieses Dampfes sind unten innerhalb des Löschreaktors Rohrschlangen vorgesehen, durch die das Wasser fließt. Durch diese Kühleinrichtung kommt es zu einer zusätzlichen Temperaturabsenkung.

Die bekannte Kalktrockenlöschanlage hat den Nachteil, daß der eingegebene Wasserdampf teilweise an den relativ zu ihm kalten Kühlschlangen kondensiert. Es kommt dadurch an den Kühlschlangen zu Kalkansätzen, die in der Praxis zu Ansätzen und zu Verstopfungen im Löschreaktor führen. Löschreaktoren nach der DE-OS 21 16 533 sind deshalb nicht einsetzbar. Aus diesem Grunde begnügt man sich bei derzeitigen, im wesentlichen aus einem oder mehreren hintereinander geschalteten Schneckenmischern bestehenden Anlagen damit, die Temperatur durch Eingabe einer ausreichend großen Wassermenge für den Löschvorgang niedrig genug zu halten. Das führt dazu, daß die Abluft einen hohen Taupunkt hat und es deshalb in nachgeschalteten Einrichtungen, insbesondere den Rohrleitungen und dem Schornstein, vor allem bei jedem An- und Abfahrvorgang leicht zu Feststoffansätzen infolge von Taupunktunterschreitungen kommt.

Eine Rauchgasentschwefelungsanlage mit einem Wirbelschichtreaktor ist beispielsweise in der EP 0 211 458 beschrieben. Bei der bekannten trockenen Rauchgasentschwefelungsanlage wird Kalkhydrat aus einem Kalkhydratsilo verwendet. Dieses Kalkhydrat wird zuvor mittels einer hierfür vorgesehenen Anlage im Kalkwerk erzeugt. Der Transport und das Zwischenlagern des Kalkhydrats verursacht Kosten und führt dazu, daß Kalkhydrat hoher Reaktivität nur gegen erheblichen Aufpreis und mit technischen Problemen bei der Förderung und Lagerung verwendet werden kann.

Der Erfindung liegt die Aufgabe zugrunde, eine Kalktrockenlöschanlage der eingangs genannten Art derart zu gestalten, daß die Temperatur im Löschreaktor ohne unerwünscht hohe Zugabe von Wasser auf einem für den Löschvorgang geeigneten und für die Reaktivität des Kalkhydrates optimalen Wert gehalten werden kann, ohne daß die Gefahr von Ansätzen im Reaktor besteht. Weiterhin soll ein Verfahren zum Kalktrockenlöschen geschaffen werden, welches mit möglichst geringen Wasserzusätzen arbeitet. Zusätzlich ist es Aufgabe der Erfindung, eine Rauchgasentschwefelungsanlage mit einer solchen Kalktrockenlöschanlage zu schaffen, die möglichst einfach aufgebaut ist und eine möglichst hohe Entschwefelung bei minimalem Kalkverbrauch bewirkt, da dadurch die zu entsorgende Reststoffmenge geringer gehalten werden kann. Ein Verfahren zur Rauchgasentschwefelung mit einer solchen Anlage ist ebenfalls Gegenstand der Erfindung.

Die erstgenannte Aufgabe wird erfindungsgemäß dadurch gelöst, daß vom Sammelbehälter eine Rückführleitung zum Löschreaktor führt und die Kühleinrichtung außerhalb des Löschreaktors vorgesehen und zur Kühlung des rückgeführten Feststoffes ausgebildet ist.

Durch diese Rückführung über eine externe Kühleinrichtung läßt sich die Temperatur im nunmehr als Rückstromwirbler ausgebildeten Löschreaktor ohne Eingabe von unerwünscht viel Wasser ausreichend niedrig halten, ohne daß die Gefahr von Anbackungen im Löschreaktor besteht. Dadurch können Taupunktunterschreitungen im Löschreaktor und in den nachgeordneten Anlageteilen, insbesondere im Schornstein, vermieden werden. Die Abluft der erfindungsgemäßen Kalktrockenlöschanlage hat bei üblichen Betriebsbedingungen noch einen Abstand von zumindest 5 Grad Celsius, vorzugsweise mindestens 15 Grad Celsius vom Wassertaupunkt. Durch die externe Kühlung des rückgeführten Staubes eignet sich die erfindungsgemäße Kalktrockenlöschanlage auch sehr gut für die Baustoffindustrie, da durch zusätzliche Staubzirkulationszyklen eine ausreichend hohe Verweilzeit verwirklicht werden kann, um das Kalziumoxid vollständig zu Kalkhydrat umzuwandeln. Durch den in der Kühlleistung variabel gestalteten Feststoffkühler lassen sich je nach Verwendungszweck Kalkhydratqualitäten niedriger oder besonders hoher Reaktivität über die frei einstellbare Löschtemperatur und Verweilzeit erzeugen.

Besonders einfach ist die Kalktrockenlöschanlage gestaltet, wenn der Sammelbehälter als Fluidisierungseinrichtung mit Kühlschlangen als Kühleinrichtung ausgebildet ist. Die nahezu trockene Fluidisierungsluft trägt zusätzlich zur Vermeidung von Wassertaupunktunterschreitungen und damit zur Vermeidung von Feststoffansätzen bei.

Die Fluidisierungseinrichtung braucht nicht mit der gesamten im Grobabscheider abgeschiedenen Feststoffmenge beaufschlagt zu werden, wenn gemäß einer anderen, vorteilhaften Ausgestaltung der Erfindung die Feststoffabscheidung einen Grobabscheider und einen diesem nachgeschalteten Feinabscheider hat und wenn vom Auslaß des Grobabscheiders eine Leitung zum Sammelbehälter und eine Leitung unmittelbar zurück zum Rückstromwirbler führt. Durch diese teilweise Rückführung von nicht gekühlten Feststoffen kann die Fluidisierung relativ klein ausgebildet und die Löschtemperatur zusätzlich verändert werden.

Der Abluftauslaß der Fludisierungseinrichtung ist vorteilhafterweise mit dem Einlaß des Feinabscheiders verbunden.

Vorteilhaft ist es auch, wenn der Feinabscheider eine Heißluftverbindung hat. Dadurch kann erforderlichenfalls Heißluft, die kein oder wenig Wasser und Kohlendioxid enthält, zur Verbesserung der Betriebsbedingungen zugegeben werden. Diese Heißluft wird im Gegensatz zum Stand der Technik in einem Bereich eingegeben, in dem der Feststoffanteil nur noch gering ist.

Eine einfache und sichere Temperaturregelung des Löschreaktors über die in ihn eingegebene Wassermenge ist möglich, wenn die Kalkeingabe in den Löschreaktor oberhalb eines die Wassereingabe in den Löschreaktor steuernden Temperaturfühlers erfolgt.

Der als Rückstromwirbler ausgebildete Löschreaktor arbeitet mit höherem Wirkungsgrad, wenn er am oberen Ende zur Minderung der Feststoffbelastung der Feststoffabscheidung einen Vorabscheider hat. Durch dieses Merkmal vermindert sich zugleich die Staubbelastung der nachgeordneten Feststoffabscheidung. Schon sehr einfach aufgebaute Vorabscheider vermögen etwa 50% der Feststoffe zurückzuhalten.

Das die zweitgenannte Aufgabe lösende Verfahren zum Kalktrockenlöschen zeichnet sich durch die in den Ansprüchen 8 bis 14 angeführten Maßnahmen aus. Die Vorteile dieses Verfahrens ergeben sich sinngemäß aus den Ausführungen zur Kalktrockenlöschanlage.

Die Aufgabe, eine möglichst einfach und wirksam aufgebaute Rauchgasentschwefelungsanlage mit einer Kalktrockenlöschanlage der vorgenannten Art zu entwickeln, wird erfindungsgemäß dadurch gelöst, daß der Kalkhydratauslaß der Kalktrockenlöschanlage unmittelbar mit dem Kalkhydrateinlaß des Rückstromwirblers der Rauchgasentschwefelungsanlage verbunden ist. Eine solche Rauchgasentschwefelungsanlage vermag vollautomatisch zu arbeiten, so daß sie ganz besonders für den Einsatz in Kraftwerken und Heizzentralen geeignet ist. Durch die intensive Rückströmung der Feststoffe kommt es im Rückstromwirbler zu besseren Bedingungen für die Abscheidung der sauren Gase, insbesondere des Schwefeldioxids.

Eine Anpassung an unterschiedliche Leistungen eines Kraftwerkes ist auch ohne ein größeres Pufferspeicher für das Kalkhydrat möglich, wenn die Kalktrockenlöschanlage zumindest zwei parallelgeschaltete Kalktrockenlöscheinheiten aufweist, von denen eine unmittelbar mit der Rauchgasentschwefelungsanlage verbunden ist und die andere Kalktrockenlöscheinheit über ein Kalkhydratspeicher mit der Rauchgasentschwefelungsanlage Verbindung hat. Eine solche Anlage ermöglicht einen "On-line-Betrieb", bei dem ein besonders reaktives Kalkhydrat zu 100% zur Schwefeldioxidabscheidung eingesetzt werden kann. Das Kalkhydrat kann mit mehr Wasser beladen werden als Kalkhydrat, welches zwischengelagert und transportiert werden muß.

Zur Verbilligung der Gesamtanlage trägt es bei, wenn gemäß einer anderen Ausgestaltung der Erfindung die Abluftauslässe der Kalktrockenlöscheinheiten dem Absorber der Rauchgasentschwefelung zugeführt sind.

Das Verfahren zur Rauchgasentschwefelung, bei dem mittels des vorgenannten Verfahrens Kalkhydrat erzeugt und dieses Kalkhydrat einem als Rückstromwirbler arbeitenden Absorber einer Entschwefelungsanlage zugeführt wird, wobei durch den Absorber anstelle von Wirbelluft schwefeldioxidhaltiges Rauchgas strömt, ist in den Ansprüchen 18 und 19 gekennzeichnet. Es vermag mit besonders hohem Wirkungsgrad zu arbeiten und führt zu kleinen Reststoffmengen.

Die Erfindung läßt zahlreiche Ausführungsformen zu. Zur weiteren Verdeutlichung ihres Grundprinzips sind eine Kalktrockenlöschanlage und zwei verschiedene Rauchgasentschwefelungsanlagen schematisch in der Zeichnung dargestellt und werden nachfolgend beschrieben. In ihr zeigen die

Fig. 1     ein Fließschema einer erfindungsgemäßen Kalktrockenlöschanlage,

Fig. 2     ein Fließschema einer Rauchgasentschwefelungsanlage mit der erfindungsgemäßen Kalktrockenlöschanlage,

Fig. 3     ein Blockschema einer zweiten Ausführungsform einer Rauchgasentschwefelungsanlage mit zwei Kalktrockenlöscheinheiten.

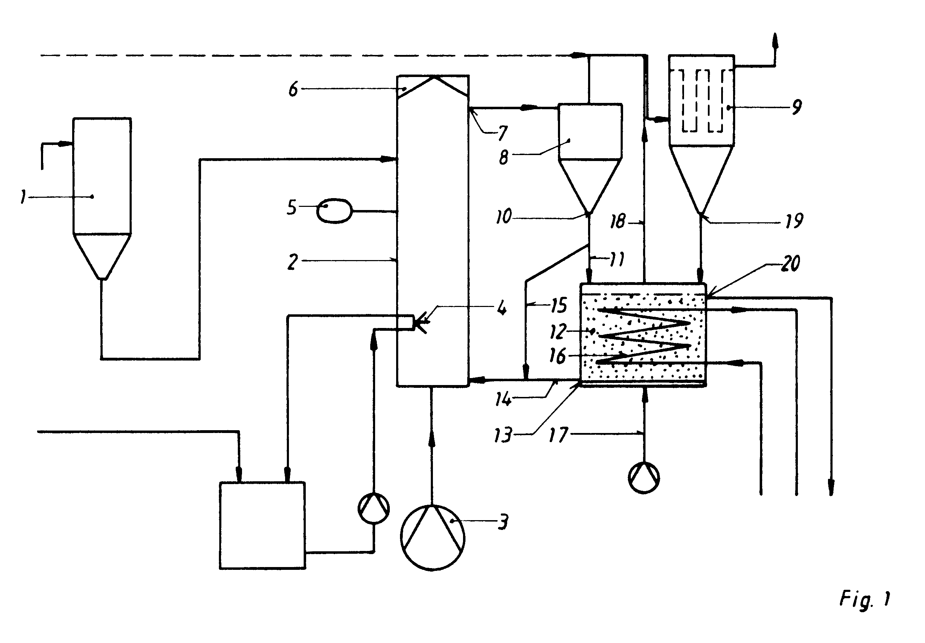

Die Figur 1 zeigt ein Silo 1 zur Speicherung von Kalziumoxid in Form von Feinkalk. Dieser Feinkalk wird einem als Rückstromwirbler ausgebildeten Löschreaktor 2 vorzugsweise im oberen Bereich zugeführt. Von unten her gelangt zur Erzeugung des Wirbelstromes mittels eines Gebläses 3 Wirbelluft in den Löschreaktor 2. Etwas oberhalb der Wirbellufteingabe ist eine Wassereindüsung 4 vorgesehen, die mittels eines Temperaturfühlers 5 gesteuert wird. Dieser Temperaturfühler befindet sich im Oberteil des Löschreaktors 2. Der Löschreaktor 2 arbeitet vorzugsweise mit Löschtemperaturen unter 65 Grad Celsius. In ihm können Kalkhydrate mit spezifischen Oberflächen von vorzugsweise über 20 qm/g, in der Regel über 30 qm/g, erzeugt werden.

Am Kopf des Löschreaktors 2 ist ein Vorabscheider 6 vorgesehen, über den die mit Kalkstaub beladene Luft den Löschreaktor 2 an einem Auslaß 7 verläßt. Diese Luft wird anschließend in einem vorzugsweise als Zyklon ausgebildeten Grobabscheider 8 vorentstaubt. Diesem Grobabscheider 8 nachgeschaltet ist ein Feinabscheider 9, bei dem es sich um ein Schlauchfilter oder Elektrofilter handeln kann. Der Grobabscheider 8 hat einen Auslaß 10, der über eine Leitung 11 mit einem Sammelbehälter 12 verbunden ist. Bei diesem Sammelbehälter 12 handelt es sich um eine Fluidisierungseinrichtung, von deren Auslaß 13 eine Rückführleitung 14 in den unteren Bereich des Löschreaktors 2 führt. Vor dem Sammelbehälter 12 zweigt von der Leitung 11 eine Bypassleitung 15 ab, die unter Umgehung des Sammelbehälters 12 zum Löschreaktor 2 führt.

Wichtig für die Erfindung ist, daß sich im Sammelbehälter 12 oder in einem anderen Abschnitt der Feststoffrückführung eine Kühleinrichtung 16 in wasserdampffreier Atmosphäre befindet, welche bei diesem Ausführungsbeispiel durch im Sammelbehälter 2 vorgesehene, wasserdurchflossene Kühlschlangen gebildet ist. Die Fluidisierungsluft wird dem Sammelbehälter 12 über eine Leitung 17 von unten her zugeführt und verläßt den Sammelbehälter 12 an seiner Oberseite über eine Leitung 18, die zum Feinabscheider 9 führt.

Der Feinabscheider 9 hat einen Auslaß 19, der ebenfalls mit dem Sammelbehälter 12 verbunden ist. Der Sammelbehälter 12 hat einen zweiten Auslaß 20, an dem das zu erzeugende Kalkhydrat anfällt.

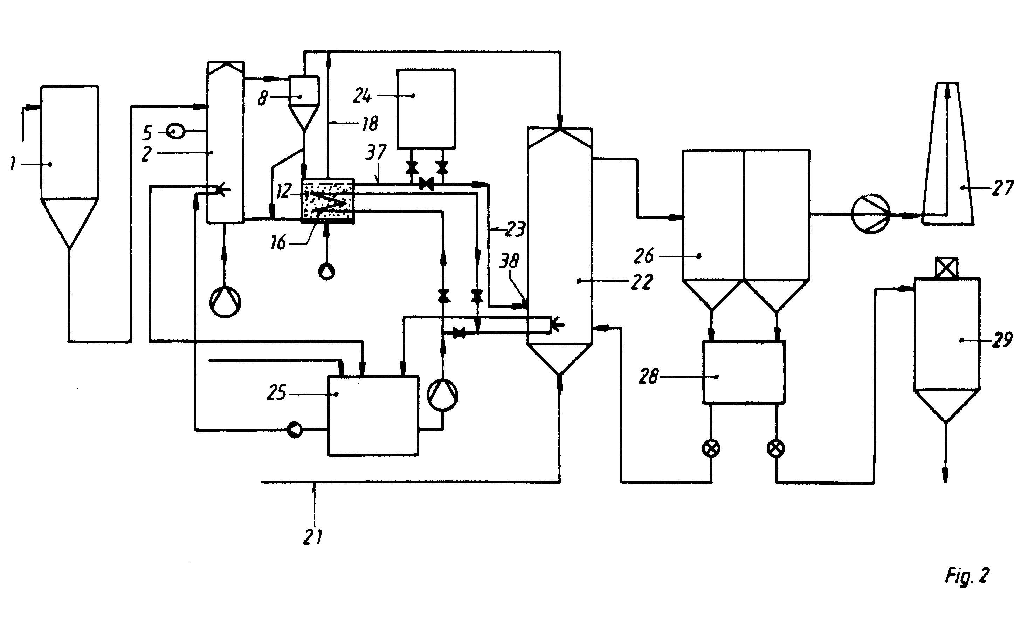

Gemäß Figur 2 ist eine gegenüber Figur 1 abgewandelte Kalktrockenlöschanlage Bestandteil einer Rauchgasentschwefelungsanlage. In Übereinstimmung mit der Kalktrockenlöschanlage nach Figur 1 ist wiederum als Löschreaktor 2 ein Rückstromwirbler vorgesehen, dem ein Grobabscheider 8 nachgeschaltet ist. Die dort abgeschiedenen Feststoffe werden teilweise unmittelbar und teilweise wiederum über den als Fluidisierungseinrichtung ausgebildeten Sammelbehälter 12 mittels der Kühleinrichtung 16 gekühlt dem Löschreaktor 2 zurückgeführt.

Ein Feinabscheider 9 ist bei der Kalktrockenlöschanlage gemäß Figur 2 nicht erforderlich. Die Abluft des als Fluidisierungsanlage ausgebildeten Sammelbehälters 12 wird statt zu einem Feinabscheider zur Entschwefelungsanlage, zum Beispiel in einen Absorber 22 oder in eine in diesen führende Rauchgasleitung 21, geführt, die als Wirblerluft von unten her in den Absorber 22 gelangt. Einem Kalkhydrateinlaß 38 dieses Absorbers 22 wird über eine von einem Kalkhydratauslaß 37 des Sammelbehälters 12 kommende Leitung 23 das in der Kalktrockenlöschanlage erzeugte Kalkhydrat unmittelbar zugeführt. Leistungsschwankungen können mittels eines Pufferspeichers 24 ausgeglichen werden, der in die Leitung 23 geschaltet ist.

Dargestellt ist in der Figur 2 desweiteren ein Wasserbehälter 25, aus dem das in den Absorber 22 einzudüsende Wasser gepumpt wird. Dieses Wasser kann zunächst durch die Kühleinrichtung 16 strömen, so daß es vorgewärmt ist. Wie bei Rauchgasentschwefelungsanlagen üblich, ist dem Absorber 22 ein Staubabscheider 26 nachgeschaltet, so daß zum Schornstein 27 entschwefeltes und entstaubtes Rauchgas gelangt. Der im Staubabscheider 26 niedergeschlagene Staub gelangt zunächst in einen Zwischenbehälter 28, von dem aus er teilweise zum Absorber 22 zurückgeführt und teilweise einem Reststoffsilo 29 zugeführt wird.

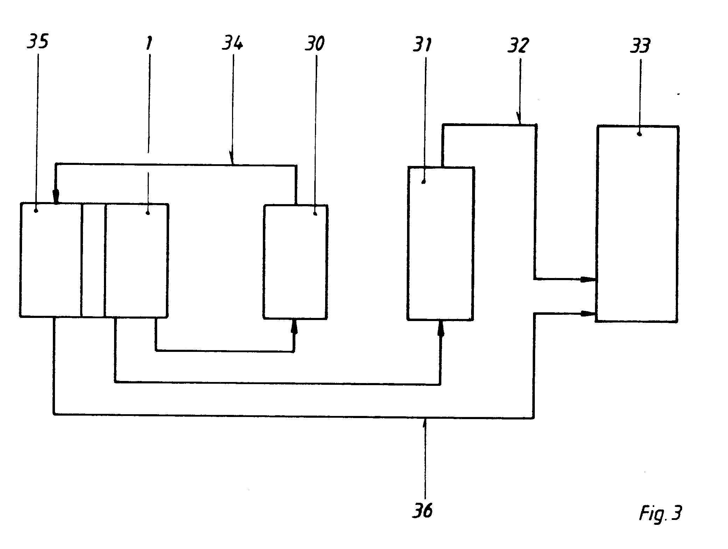

Im Blockschaltbild gemäß Figur 3 ist dargestellt, daß hinter einem Silo 1 für Kalziumoxid zwei Trockenlöscheinheiten 30, 31 unterschiedlicher Leistung parallel zueinander angeordnet sein können. Die Kalktrockenlöscheinheit 31 ist für den Grundlastbereich ausgelegt. Das in ihr erzeugte hochreaktive Kalkhydrat gelangt unmittelbar über eine Leitung 32 zu einer Rauchgasentschwefelungsanlage 33. Die Kalktrockenlöscheinheit 30 ist für den Spitzenlastbereich vorgesehen. Aus ihr gelangt Kalkhydrat üblicher Reaktivität über eine Leitung 34 in einen Kalkhydratspeicher 35, von dem aus es bei Bedarf der Rauchgasentschwefelungsanlage 33 über eine Leitung 36 zugeführt werden kann.

Auflistung der verwendeten Bezugszeichen

| 1 | Silo |
|---|---|
| 2 | Löschreaktor |
| 3 | Gebläse |
| 4 | Wassereindüsung |
| 5 | Temperaturfühler |
| 6 | Vorabscheider |
| 7 | Auslaß |
| 8 | Grobabscheider |
| 9 | Feinabscheider |
| 10 | Auslaß |
| 11 | Leitung |
| 12 | Sammelbehälter |
| 13 | Auslaß |
| 14 | Rückführleitung |
| 15 | Bypassleitung |
| 16 | Kühleinrichtung |
| 17 | Leitung |
| 18 | Leitung |

19 Auslaß
20 Auslaß
21 Rauchgasleitung
22 Absorber
23 Leitung
24 Pufferspeicher
25 Wasserbehälter
26 Staubabscheider
27 Schornstein
28 Zwischenbehälter
29 Reststoffsilo
30 Kalktrockenlöscheinheit
31 Kalktrockenlöscheinheit
32 Leitung
33 Rauchgasentschwefelungsanlage
34 Leitung
35 Kalkhydratspeicher
36 Leitung
37 Kalkhydratauslaß
38 Kalkhydrateinlaß

**Patentansprüche**

1. Kalktrockenlöschanlage mit einem Löschreaktor (2), in welchem der zu löschende Kalk eingetragen und von unten Wirblerluft eingeblasen und Löschwasser eingegeben wird und hinter dem eine Feststoffabscheidung mit einem Sammelbehälter (12) vorgesehen ist und die eine Kühleinrichtung (16) zum Aufnehmen eines Teils der beim Löschvorgang freiwerdenden Wärme hat, dadurch gekennzeichnet, daß vom Sammelbehälter (12) eine Rückführleitung (14) zum Löschreaktor (2) führt und die Kühleinrichtung (16) außerhalb des Löschreaktors (2) vorgesehen und zur Kühlung des rückgeführten Feststoffes ausgebildet ist.

2. Kalktrockenlöschanlage nach Anspruch 1, dadurch gekennzeichnet, daß der Sammelbehälter (12) als Fluidisierungseinrichtung mit Kühlschlangen als Kühleinrichtung (16) ausgebildet ist.

3. Kalktrockenlöschanlage nach den Ansprüchen 1 oder 2, dadurch gekennzeichnet, daß die Feststoffabscheidung einen Grobabscheider (8) und einen diesem nachgeschalteten Feinabscheider (9) hat und daß vom Auslaß (10) des Grobabscheiders (8) eine Leitung (11) zum Sammelbehälter (12) und eine Leitung (15) unmittelbar zurück zum Rückstromwirbler (2) führt.

4. Kalktrockenlöschanlage nach einem oder mehreren der vorangehenden Ansprüche, dadurch gekennzeichnet, daß der Abluftauslaß der Fluidisiereinrichtung (Sammelbehälter 12) mit dem Einlaß des Feinabscheiders (9) verbunden ist.

5. Kalktrockenlöschanlage nach einem oder mehreren der vorangehenden Ansprüche, dadurch gekennzeichnet, daß der Feinabscheider (9) eine Heißluftverbindung hat.

6. Kalktrockenlöschanlage nach einem oder mehreren der vorangehenden Ansprüche, dadurch gekennzeichnet, daß die Kalkeingabe in den Löschreaktor (2) oberhalb eines die Wassereingabe in den Löschreaktor (2) steuernden Temperaturfühlers (5) erfolgt.

7. Kalktrockenlöschanlage nach einem oder mehreren der vorangehenden Ansprüche, dadurch gekennzeichnet, daß der Löschreaktor (2) am oberen Ende zur Minderung der Feststoffbelastung der Feststoffabscheidung einen Vorabscheider (6) hat.

8. Verfahren zum Kalktrockenlöschen mittels eines Löschreaktors, in welchem der zu löschende Kalk eingetragen und von unten Wirblerluft eingeblasen und Löschwasser eingegeben wird und hinter dem eine Feststoffabscheidung mit einem Sammelbehälter vorgesehen ist und bei dem eine Kühleinrichtung zum Aufnehmen eines Teils der beim Löschvorgang freiwerdenden Wärme vorgesehen ist, dadurch gekennzeichnet, daß die Feststoffe vom Sammelbehälter teilweise zurückgeführt und dabei gekühlt werden.

9. Verfahren nach Anspruch 8, dadurch gekennzeichnet, daß die Feststoffabscheidung in zwei Stufen vorgenommen wird und in den Einlaß der Feinabscheidung zusätzlich Heißgas eingegeben wird.

10. Verfahren nach den Ansprüchen 8 oder 9, dadurch gekennzeichnet, daß im Kopf des Löschreaktors zur Erzeugung einer Feststoffrückströmung eine Vorabscheidung vorgenommen wird.

11. Verfahren nach den Ansprüchen 8, 9 oder 10, dadurch gekennzeichnet, daß die innerhalb des Löschreaktors zurückgeführte Feststoffmenge größer 20%, vorzugsweise größer 40% der insgesamt zum Kopf des Löschreaktors wirbelnden Feststoffmenge beträgt.

12. Verfahren nach Anspruch 8 oder einem der folgenden, dadurch gekennzeichnet, daß reaktives Kalkhydrat bei Temperaturen von unter 100 Grad Celsius, vorzugsweise unter 65 Grad Celsius erzeugt wird.

13. Verfahren nach Anspruch 8 oder einem der folgenden, dadurch gekennzeichnet, daß so stark indirekt gekühlt wird, daß die Abluft der Kalktrockenlöschanlage eine Temperatur hat, die mindestens 5 Grad, vorzugsweise 15 Grad Celsius Abstand vom Wassertaupunkt hat.

14. Verfahren nach Anspruch 8 oder einem der folgenden, dadurch gekennzeichnet, daß durch Wahl der Temperatur und Verweilzeit ein mehr als 90%, vorzugsweise mehr als 99% gelöschtes Kalkhydrat erzeugt wird.

15. Rauchgasentschwefelungsanlage mit einer Kalktrockenlöschanlage nach einem oder mehreren der Ansprüche 1 - 7, bei der das erzeugte Kalkhydrat einem als Rückstromwirbler arbeitenden Entschwefelungsabsorber (22) zugeführt wird, durch den anstelle von Wirbelluft schwefeldioxidhaltiges Rauchgas strömt, dadurch gekennzeichnet, daß der Kalkhydratauslaß (37) der Kalktrockenlöschanlage unmittelbar mit dem Kalkhydrateinlaß (38) des Rückstromwirblers (22) der Rauchgasentschwefelungsanlage verbunden ist.

16. Rauchgasentschwefelungsanlage nach Anspruch 15, dadurch gekennzeichnet, daß die Kalktrockenlöschanlage zumindest zwei parallelgeschaltete Kalktrockenlöscheinheiten (30, 31) aufweist, von denen eine unmittelbar mit der Rauchgasentschwefelungsanlage (33) verbunden ist und die andere Kalktrockenlöscheinheit (30) über ein Kalkhydratspeicher (35) mit der Rauchgasentschwefelungsanlage (33) Verbindung hat.

17. Rauchgasentschwefelungsanlage nach Anspruch 15, dadurch gekennzeichnet, daß die Abluftauslässe der Kalktrockenlöscheinheitendem Absorber (22) der Rauchgasentschwefelung zugeführt sind.

18. Verfahren zur Rauchgasentschwefelung, bei dem mittels des Verfahrens nach einem oder mehreren der Ansprüche 8 - 14 Kalkhydrat erzeugt und dieses Kalkhydrat einem als Rückstromwirbler arbeitenden Absorber einer Entschwefelungsanlage zugeführt wird, wobei durch den Absorber anstelle von Wirbelluft schwefeldioxidhaltiges Rauchgas strömt, dadurch gekennzeichnet, daß die Kalktrockenlöschanlage der Rauchgasentschwefelungsanlage unmittelbar vorgeschaltet wird, so daß das Kalkhydrat von der Kalktrockenlöschanlage unmittelbar zum Absorber gelangt.

19. Verfahren nach Anspruch 18, dadurch gekennzeichnet, daß das erwärmte Kühlwasser der Kalktrockenlöschanlage in den Absorber der Entschwefelungsanlage eingedüst wird und das kalte Kühlwasser aus dem Wasserbehälter der Rauchgasentschwefelungsanlage entnommen wird.

**Claims**

1. Dry lime-slaking plant with a slaking reactor (2) in which the lime to be slaked is input, whirling air is blown in from below and slaking water is introduced and downstream of which there is provided a solids separator with a reservoir (12) and which has a cooler (16) for receiving a proportion of the heat liberated during the slaking process, characterised in that a return line (14) leads from the reservoir (12) to the slaking reactor (2) and the cooler (16) is provided outside the slaking reactor (2) and is designed to cool the recirculated solid matter.

2. Dry lime-slaking plant according to Claim 1, characterised in that the reservoir (12) is designed as a fluidising device with cooling coils as cooler (16).

3. Dry lime-slaking plant according to Claims 1 or 2, characterised in that the solids separator has a coarse separator (8) and a fine separator (9) following it and in that a line (11) leads from the outlet (10) of the coarse separator (8) to the reservoir (12) and a line (15) leads directly back to the backflow whirler (2).

4. Dry lime-slaking plant according to one or more of the preceding claims, characterised in that the outgoing air outlet of the fluidising device (reservoir 12) is connected to the inlet of the fine separator (9).

5. Dry lime-slaking plant according to one or more of the preceding claims, characterised in that the fine separator (9) has a hot air connection.

6. Dry lime-slaking plant according to one or more of the preceding claims, characterised in that the lime is introduced into the slaking reactor (2) above a temperature sensor (5) controlling the introduction of water into the slaking reactor (2).

7. Dry lime-slaking plant according to one or more of the preceding claims, characterised in that the slaking reactor (2) has a preliminary separator (6) at the upper end to reduce the solids loading of the solids separator.

8. Process for dry lime-slaking by means of a slaking reactor in which the lime to be slaked is input and whirler air is blown in from below and slaking water is introduced and downstream of which there is provided a solids separator with a reservoir and in which a cooler is provided for receiving a proportion of the heat liberated during the slaking process, characterised in that some of the solids from the reactor are recirculated and are thereby cooled.

9. Process according to Claim 8, characterised in that the solids are separated in two stages and hot gas is additionally introduced into the inlet of the fine separator.

10. Process according to Claims 8 or 9, characterised in that preliminary separation is carried out in the top of the slaking reactor to produce a backflow of solids.

11. Process according to Claims 8, 9 or 10, characterised in that the quantity of solids recirculated within the slaking reactor is greater than 20%, preferably greater than 40% of the quantity of solids whirling overall to the top of the slaking reactor.

12. Process according to Claim 8 or one of the following, characterised in that reactive calcium hydroxide is produced at temperatures below 100 degrees Celsius, preferably below 65 degrees Celsius.

13. Process according to Claim 8 or one of the following, characterised in that indirect cooling is carried out so intensively that the outgoing air from the dry lime-slaking plant is at a temperature at an interval of at least 5 degrees, preferably 15 degrees Celsius from the dew point of water.

14. Process according to Claim 8 or one of the following, characterised in that a calcium hydroxide which is more than 90%, preferably more than 99% slaked is produced by selecting the temperature and residence time.

15. Flue gas desulphuration plant with a dry lime-slaking plant according to one or more of Claims 1 - 7, in which the produced calcium hydroxide is supplied to a desulphuration absorber (22) operating as a backflow whirler, through which sulphur dioxide-containing flue gas flows instead of whirling air, characterised in that the calcium hydroxide outlet (37) of the dry lime-slaking plant is connected directly to the calcium hydroxide inlet (38) of the backflow whirler (22) of the flue gas desulphuration plant.

16. Flue gas desulphuration plant according to Claim 15, characterised in that the dry lime-slaking plant has at least two dry lime-slaking units (30, 31) which are connected in parallel and of which one is connected directly to the flue gas desulphuration plant (33) and the other dry lime-slaking unit (30) is connected via a calcium hydroxide store (35) to the flue gas desulphuration plant (33).

17. Flue gas desulphuration plant according to Claim 15, characterised in that the outgoing air outlets of the dry lime-slaking units are supplied to the absorber (22) of the flue gas desulphuration means.

18. Process for the desulphuration of flue gas, in which calcium hydroxide is produced by the process according to one or more of Claims 8 - 14 and this calcium hydroxide is supplied to an absorber, operating as a backflow whirler, of a desulphuration plant, sulphur dioxide-containing flue gas flowing through the absorber instead of whirling air, characterised in that the dry lime-slaking plant directly precedes the flue gas desulphuration plant so that the calcium hydroxide passes from the dry lime-slaking plant directly to the absorber.

19. Process according to claim 18, characterised in that the heated cooling water of the dry lime-slaking plant is injected into the absorber or the desulphuration plant and the cold cooling water is removed from the water container of the flue gas desulphuration plant.

**Revendications**

1. Extincteur de chaux à sec comportant un réacteur d'extinction (2) dans lequel on introduit la chaux à éteindre et on injecte à partir du bas de l'air de cyclone et on introduit de l'eau d'extinction et derrière lequel est prévue une séparation de matière solide avec un réservoir collecteur (12) et qui comporte une installation de refroidissement (16) pour l'absorption d'une partie de la chaleur libérée lors du processus d'extinction caractérisé en ce qu'un conduit de retour (14) va du réservoir collecteur (12) au réacteur d'extinction (2) et l'installation de refroidissement (16) est prévue en dehors du réacteur d'extinction (2) et est agencée pour le refroidissement de la matière solide retournée.

2. Extincteur de chaux à sec selon la revendication 1 caractérisé en ce que le réservoir collecteur (12) est réalisé sous forme d'installation de fluidisation avec des serpentins comme installation de refroidissement (16).

3. Extincteur de chaux à sec selon la revendication 1 ou 2 caractérisé en ce que la séparation de matière solide comporte un séparateur grossier (8) et un séparateur fin (9) placé en aval et un conduit (11) amène de la sortie (10) du séparateur grossier (8) au réservoir collecteur (12) et un conduit (15) ramène directement au cyclone (2) à courant de retour.

4. Extincteur de chaux à sec selon une ou plusieurs des revendications précédentes caractérisé en ce que la sortie à air d'évacuation de l'installation de fluidisation (réservoir collecteur 12) est reliée à l'entrée du séparateur fin (9).

5. Extincteur de chaux à sec selon une ou plusieurs des revendications précédentes caractérisé en ce que le séparateur fin (9) comporte un raccordement à air chaud.

6. Extincteur de chaux à sec selon une ou plusieurs des revendications précédentes caractérisé en ce que l'introduction de chaux dans le réacteur d'extinction (2) a lieu à un emplacement supérieur à celui d'un détecteur de température (5) commandant l'introduction d'eau dans le réacteur d'extinction (2).

7. Extincteur de chaux à sec selon une ou plusieurs des revendications précédentes caractérisé en ce que le réacteur d'extinction (2) comporte à l'extrémité supérieur un pré-séparateur (6) pour la réduction de la charge en matière solide de la séparation de matière solide.

8. Procédé d'extinction de chaux à sec au moyen d'un réacteur d'extinction dans lequel on introduit la chaux à éteindre et on injecte de l'air de cyclone à partir du bas et on introduit de l'eau d'extinction et derrière lequel est prévue une séparation de matère solide avec un réservoir collecteur et dans lequel est prévue une installation de refroidissement pour l'absorption d'une partie de la chaleur se libérant lors du processus d'extinction caractérisé en ce que les matières solides sont partiellement recyclées à partir du réservoir collecteur et sont ainsi refroidies.

9. Procédé selon la revendication 8 caractérisé en ce que la séparation de matière solide est effectuée en deux stades et on introduit en supplément du gaz chaud dans l'entrée de la séparation fine.

10. Procédé selon les revendications 8 ou 9 caractérisé en ce qu'une pré-séparation est effectuée au sommet du réacteur d'extinction pour la production d'un courant de retour de matière solide.

11. Procédé selon la revendication 8, 9 ou 10 caractérisé en ce que la quantité de matière solide retournée dans le réacteur d'extinction est supérieure à 20 %, de préférence supérieure à 40 %, de la quantité de matière solide allant par un mouvement tourbillonaire au total au sommet du réacteur d'extinction.

12. Procédé selon la revendication 8 ou l'une des revendications suivantes caractérisé en ce qu'on produit de "l'hydrate de chaux" (chaux éteinte entièrement ou partiellement) réactif à des températures inférieures à 100° C, de préférence inférieures à 65° C.

13. Procédé selon la revendication 8 ou l'une des revendications suivantes caractérisé en ce qu'on refroidit indirectement suffisamment fortement pour que l'air d'évacuation de l'extincteur de chaux à sec ait une température présentant un écart d'au moins 5° c, de préférence 15° C, par rapport au point de condensation de l'eau.

14. Procédé selon la revendication 8 ou l'une des revendications suivantes caractérisé en ce qu'on obtient, par choix de la température et de la durée de séjour, un hydrate de chaux éteint à plus de 90 %, de préférence à plus de 99 %.

15. Installation de désulfuration de gaz de fumée comportant un extincteur de chaux à sec selon une ou plusieurs des revendications 1 à 7 où l'hydrate de chaux produit est amené dans un absorbeur de désulfuration (22) opérant comme cyclone à courant de retour à travers lequel circule du gaz de fumée contenant de l'anhydride sulfureux au lieu d'air tourbillonnaire, caractérisée en ce que la sortie d'hydrate de chaux (37) de l'extincteur de chaux à sec est reliée directement à l'entrée d'hydrate de chaux (38) du cyclone à courant de retour (22) de l'installation de désulfuration de gaz de fumée.

16. Installation de désulfuration de gaz de fumée selon la revendication 15 caractérisée en ce que l'extincteur de chaux à sec comporte au moins deux unités d'extinction de chaux à sec placées en parallèle (30, 31) dont l'une est reliée directement à l'installation de désulfuration de gaz de fumée (33) et l'autre unité d'extinction de chaux à sec (30) est reliée par l'intermédiaire d'un réservoir d'hydrate de chaux (35) à l'installation de désulfuration de gaz de fumée (33).

17. Installation de désulfuration de gaz de fumée selon la revendication 15 caractérisée en ce que les sorties de gaz d'évacuation des unités d'extinction de chaux à sec amènent à l'absorbeur (22) de la désulfuration de gaz de fumée.

18. Procédé de désulfuration de gaz de fumée dans lequel on produit de l'hydrate de chaux au moyen du procédé selon une ou plusieurs des revendications 8 à 14 et cet hydrate de chaux est amené dans un absorbeur d'une installation de désulfuration, du gaz de fumée contenant de l'anhydride sulfureux à la place d'air tourbillonnaire circulant à travers l'absorbeur, caractérisé en ce que l'extincteur de chaux à sec est placé immédiatement en amont de l'installation de désulfuration de gaz de fumée de sorte que l'hydrate de chaux parvient directement de l'extincteur de chaux à sec à l'absorbeur.

19. Procédé selon la revendication 18 caractérisé en ce que l'eau de refroidissement réchauffée de l'extincteur de chaux à sec est introduite par une buse dans l'absorbeur de l'installation de désulfuration et l'eau de refroidissement froide est prélevée à partir du réservoir d'eau de l'installation de désulfuration de gaz de fumée.

Fig. 1

Fig. 2

EP 0 297 340 B1

*35*    *1*    *34*    *30*    *31*    *32*    *33*

*36*    *Fig. 3*